# EUROPEAN PATENT APPLICATION

(11) **EP 4 804 585 A1**
(43) Date of publication of application: **09.09.2026**
(21) Application number: 24896429.8
(22) Date of filing: 22.11.2024
(51) Int. Cl.: H04W 12/084

(54) **COMMUNICATION METHOD AND RELATED DEVICE**

(30) Priority: 29.11.2023 CN 202311622819
(71) Applicant: Huawei Technologies Co., Ltd., Shenzhen, Guangdong 518129 (CN)
(72) Inventor: LI, Lun, Shenzhen, Guangdong 518129 (CN); GUO, Longhua, Shenzhen, Guangdong 518129 (CN); WU, Rong, Shenzhen, Guangdong 518129 (CN); LI, He, Shenzhen, Guangdong 518129 (CN)
(74) Representative: Pfenning, Meinig & Partner mbB
(86) International application number: PCT/CN2024/133781
(87) International publication number: WO 2025/113338

(57) **Abstract**

Embodiments of this application provide a communication method and a related device, and relate to the communication field. In the method, a fourth network element obtains identification information of a first network element. The fourth network element determines, based on a token of the first network element, to-be-analyzed data from a second network element. The token corresponds to the identification information of the first network element, the token includes first information, and the first information indicates a data type for which the first network element has read permission. The to-be-analyzed data is used to evaluate a service network element. The fourth network element sends the to-be-analyzed data to the first network element. It can be learned that in this solution, the token of the first network element may be used to implement fine-grained authorization management on the data from the second network element, and allocate different to-be-analyzed data to different first network elements.

## Description

This application claims priority to Chinese Patent Application No. 202311622819.7, filed with the China National Intellectual Property Administration on November 29, 2023 and entitled "COMMUNICATION METHOD AND RELATED DEVICE", which is incorporated herein by reference in its entirety.

### TECHNICAL FIELD

Embodiments of this application relate to the communication field, and in particular, to a communication method and a related device.

### BACKGROUND

Identification of data related to malicious behaviors may be related to various events, such as predefined service operation violations (for example, messages in incorrect formats), unexpected configuration changes, message requests exceeding configuration limits, and current resource utilization information (if resource utilization limits are exceeded). Such information can be indirectly collected as inference data, in a form of security logs or reports, from an evaluation target through an operation administration and maintenance (Operation Administration and Maintenance, OAM).

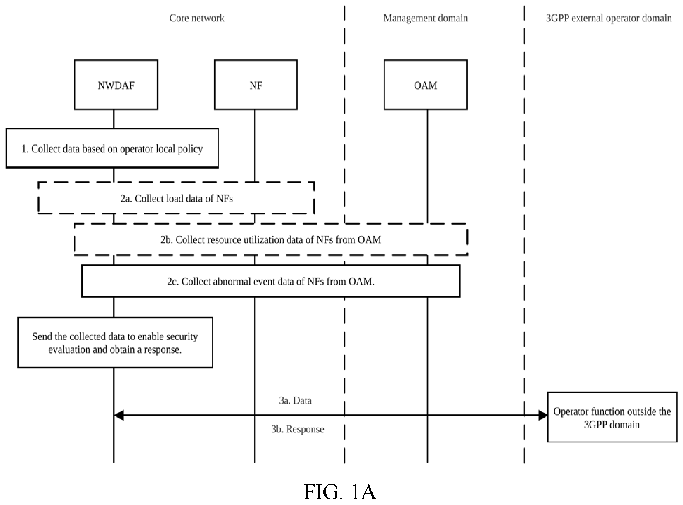

For a collection solution of new data related to the malicious behaviors, refer to FIG. 1A. FIG. 1A is a schematic flowchart of collecting NF data in a plurality of aspects according to an embodiment of this application. FIG. 1A shows data collection and data exposure for security assessment, and includes the following steps.
1. A network data analytics network element (Network Data Analytics Function, NWDAF) collects data based on a local policy of an operator. The NWDAF can collect the data and provide a function to an external operator, to enable (assist in) the security evaluation and monitoring.
2a. The NWDAF collects load data of a network function (Network Function, NF). The load data of the NF may be collected from a network repository function (Network Repository Function, NRF).
2b. The NWDAF collects resource utilization data of the NF from the OAM. The resource utilization data of the NF is data of a CPU, a memory, and the like.
2c. The NWDAF collects abnormal event data of the NF from the OAM. Specifically, the NWDAF subscribes to a management service of the OAM, and collects data of one or more evaluated events related to a target NF and related events related to various specific malicious behaviors.

The NWDAF sends the collected data to enable the security evaluation and obtain a response. For details, refer to step 3a and step 3b.
3a. The NWDAF serves as a data collection agent, and provides the collected data to an operator function outside a 3GPP domain, for example, an external operator managed network element (External Operator Managed Function, EOMF) through a NEF, where the EOMF is a network element that enables the security assessment and detection.
3b. The external operator function sends a security evaluation response to the NWADF.

In the procedure shown in FIG. 1A, the NEF can only send all data to the EOMF for analysis.

Therefore, how to resolve the foregoing issues is a hot topic that is being researched by a person skilled in the art.

### SUMMARY

This application provides a communication method and a related device, to perform fine-grained authorization on data used to evaluate a service network element.

According to a first aspect, a communication method is provided. The communication method may be performed by a communication apparatus, or may be performed by a chip in the communication apparatus. For example, the communication apparatus is a fourth network element.

The communication method includes the following steps: obtaining identification information of a first network element; determining, based on a token of the first network element, to-be-analyzed data from a second network element, where the token corresponds to the identification information of the first network element, the token includes first information, the first information indicates a data type for which the first network element has read permission, and the to-be-analyzed data is used to evaluate a service network element; and sending the to-be-analyzed data to the first network element.

The service network element is a network element that carries terminal services.

It can be learned that in this solution, the identification information of the first network element is first obtained. Because the identification information of the first network element corresponds to the token, the token of the first network element may be determined based on the identification information of the first network element. Then, the to-be-analyzed data sent to the first network element is determined based on the token of the first network element, to implement fine-grained authorization management on the data from the second network element, and allocate different to-be-analyzed data to different first network elements.

In a possible implementation of the first aspect, the determining, based on the token of the first network element, the to-be-analyzed data from the second network element specifically includes the following step: determining the to-be-analyzed data based on the token and collected data of the second network element, where a data type of the to-be-analyzed data is a data type of all or a part of the collected data.

The second network element obtains data from the service network element to obtain the foregoing collected data.

In this solution, the to-be-analyzed data may be determined based on the token and the collected data of the second network element. The data type of the to-be-analyzed data is the data type of all or the part of the collected data. In other words, the to-be-analyzed data may be all or the part of the collected data.

In a possible implementation of the first aspect, the obtaining the identification information of the first network element specifically includes the following step: receiving a data analysis request of the second network element, where the data analysis request includes the identification information of the first network element, and the data analysis request is used to trigger the first network element to perform data analysis.

In this solution, the identification information of the first network element may be obtained based on the data analysis request sent by the second network element.

In a possible implementation of the first aspect, the data analysis request further includes the collected data of the second network element and second information, where the second information indicates a data type of the collected data; and the determining, based on the token of the first network element, the to-be-analyzed data from the second network element specifically includes the following step: determining the to-be-analyzed data from the collected data based on the token and the second information, where the data type of the to-be-analyzed data is an intersection data type of a data type indicated by the token and the data type indicated by the second information.

In this solution, data type comparison is performed based on the second information carried in the data analysis request and the token, to determine the to-be-analyzed data. The intersection data type may be the data type indicated by the token or a part of data types in the data type indicated by the token.

In a possible implementation of the first aspect, after the receiving the data analysis request of the second network element, the communication method further includes the following steps: sending a token check request to the first network element; and receiving a token check response of the first network element, where the token check response includes the token of the first network element.

In this solution, the first network element sends the token check response in response to the token check request, to obtain the token of the first network element from the token check response.

In a possible implementation of the first aspect, after the receiving the data analysis request of the second network element, the communication method further includes: sending the data analysis request to the first network element; and receiving a data analysis request response of the first network element. The determining, based on the token of the first network element, the to-be-analyzed data from the second network element specifically includes the following step: when the data analysis request response indicates that the first network element accepts the data analysis request, determining the to-be-analyzed data based on the token of the first network element.

In this solution, when it is determined, based on the data analysis request response, that the first network element accepts the data analysis request, the to-be-analyzed data sent to the first network element is determined based on the token of the first network element, and read permission of the first network element is verified based on the token, to ensure data security.

In a possible implementation of the first aspect, the data analysis request further includes a type of data that is expected to be analyzed for the second network element; and when the first network element does not support reading of the type of data that is expected to be analyzed for the second network element, the data analysis request response includes a type of data that is unreadable by the first network element.

In this solution, the data analysis request response carries the type of data that is unreadable by the first network element, so that the second network element may re-adjust, according to a requirement, the type of data that is expected to be analyzed.

In a possible implementation of the first aspect, the determining, based on the token of the first network element, the to-be-analyzed data from the second network element specifically includes the following steps: checking the token of the first network element; when a check result of the token is that the check is a pass, sending the data analysis request response to the second network element, where the data analysis request response includes the identification information of the first network element and the first information; and receiving the to-be-analyzed data of the second network element, where the data type of the to-be-analyzed data is a data type indicated by the first information.

In this solution, when the token of the first network element passes the check, the first information of the first network element is carried in the data analysis request response, to indicate the second network element to collect data corresponding to the data type indicated by the first information, so as to implement directional data collection.

In a possible implementation of the first aspect, the sending the to-be-analyzed data to the first network element specifically includes the following steps: checking the token of the first network element again; and when a check result of the token is that the check is a pass, sending the to-be-analyzed data to the first network element.

In this solution, before the to-be-analyzed data is sent to the first network element, the token of the first network element is checked again, to ensure that the first network element has read permission for the to-be-analyzed data.

In a possible implementation of the first aspect, the obtaining the identification information of the first network element specifically includes the following step: receiving a data subscription request sent by the first network element, where the data subscription request includes the identification information of the first network element, and the data subscription request is used to trigger the second network element to perform data collection.

In this solution, the identification information of the first network element is obtained by using the data subscription request sent by the first network element.

In a possible implementation of the first aspect, the determining the to-be-analyzed data based on the token of the first network element specifically includes the following steps: checking the token of the first network element; when a check result of the token is that the check is a pass, sending the identification information of the first network element and the first information to the second network element; and receiving a data analysis request of the second network element, where the data analysis request includes the to-be-analyzed data and the identification information of the first network element, and a data type of the to-be-analyzed data is a data type indicated by the first information.

In this solution, when the token of the first network element passes the check, the first information is sent to the second network element to indicate data that needs to be collected by the second network element. The second network element collects the data based on the first information, to obtain the to-be-analyzed data, and then adds the to-be-analyzed data to the data analysis request.

In a possible implementation of the first aspect, the sending the to-be-analyzed data to the first network element specifically includes the following step: sending the data analysis request to the first network element.

In this solution, the to-be-analyzed data is carried in the data analysis request, to send the to-be-analyzed data to the first network element.

In a possible implementation of the first aspect, the checking the token of the first network element specifically includes the following steps: sending the data subscription request to the second network element; receiving a token query request sent by the second network element, where the token query request includes the identification information of the first network element; and checking the token of the first network element in response to the token query request.

In this solution, the data subscription request is sent to the second network element, and the data subscription request includes the identification information of the first network element. The second network element determines, based on the identification information of the first network element, whether to check the token of the first network element. When the token of the first network element needs to be checked, the second network element sends the token query request. The token of the first network element is checked in response to the token query request of the second network element.

In a possible implementation of the first aspect, the communication method further includes the following steps: receiving a token registration request of the first network element, where the token registration request includes the identification information of the first network element and the token of the first network element; and storing the identification information of the first network element and the token of the first network element.

In this solution, the first network element initiates the token registration request to implement token registration.

In a possible implementation of the first aspect, the storing the identification information of the first network element and the token of the first network element specifically includes the following steps: performing validity check on the token of the first network element; and when a check result of the validity check is that the check is a pass, storing the identification information of the first network element and the token of the first network element.

In this solution, before the identification information of the first network element and the token are stored, validity check is performed on the token of the first network element. The identification information of the first network element and the token of the first network element are stored only when the validity check is passed, to ensure validity of the token that needs to be registered.

In a possible implementation of the first aspect, the data type includes at least one of the following: load data of the service network element, resource utilization data of the service network element, abnormal event data of the service network element, or energy consumption data of the service network element.

In a possible implementation of the first aspect, the load data is from a network repository network element, or the resource utilization data and/or the abnormal event data is from an operation administration and maintenance network element.

In this solution, the load data of the service network element is obtained from the network repository network element, and the resource utilization data and/or the abnormal event data of the service network element is obtained from the operation administration and maintenance network element.

According to a second aspect, this application further provides a communication method. The communication method may be performed by a communication apparatus, or may be performed by a chip in the communication apparatus. For example, the communication apparatus is an authentication server.

The communication method includes the following steps: receiving a token issuance request of a first network element, where the token issuance request includes identification information of the first network element; and sending a token granting response to the first network element, where the token granting response includes a token of the first network element, the token corresponds to the identification information of the first network element, the token includes first information, and the first information indicates a data type for which the first network element has read permission.

In this solution, the token is granted to the first network element in response to the token issuance request of the first network element, to indicate the type of data for which the first network element has read permission.

In a possible implementation of the second aspect, after the receiving the token issuance request of the first network element, the communication method further includes the following steps: sending a subscription information query request to a third network element, where the subscription information query request includes the identification information of the first network element; and receiving a subscription information response sent by the third network element, where the subscription information response includes a trust level and/or a service type of the first network element, where the token of the first network element is determined based on the identification information of the first network element and/or the subscription information response.

In this solution, the subscription information response is obtained from the third network element based on the identification information of the first network element, where the subscription information response includes the trust level and/or the service type of the first network element, and the token of the first network element is further determined based on the identification information of the first network element and the subscription information response.

In a possible implementation of the second aspect, the token issuance request further includes third information, and the third information indicates a type of data that the first network element prefers to read; and the token of the first network element is determined based on at least one of the identification information of the first network element, the subscription information response, and the third information.

According to a third aspect, this application further provides a communication method, applied to a first network element. The communication method may be performed by the first network element, or may be performed by a chip in the first network element.

The communication method includes the following steps: sending a token issuance request to an authentication server, where the token issuance request includes identification information of the first network element; and receiving a token granting response sent by the authentication server, where the token granting response includes a token of the first network element, the token corresponds to the identification information of the first network element, the token includes first information, and the first information indicates a data type for which the first network element has read permission.

In this solution, the first network element sends the token issuance request to the authentication server, and receives the token granting response sent by the authentication server, to obtain the corresponding token.

In a possible implementation of the third aspect, the token of the first network element is determined based on the identification information of the first network element and/or a subscription information response from a third network element, and the subscription information response includes a trust level and/or a service type of the first network element.

In a possible implementation of the third aspect, the token issuance request further includes third information, and the third information indicates a type of data that the first network element prefers to read; and the token of the first network element is determined based on at least one of the identification information of the first network element, the subscription information response, and the third information.

According to a fourth aspect, this application further provides a communication method, applied to a first network element. The communication method may be performed by the first network element, or may be performed by a chip in the first network element.

The communication method includes the following steps: receiving to-be-analyzed data sent by a fourth network element, where the to-be-analyzed data is determined by the fourth network element based on a token of the first network element, and the to-be-analyzed data is from a second network element. The token corresponds to identification information of the first network element, the token includes first information, and the first information indicates a data type for which the first network element has read permission. The to-be-analyzed data is used to evaluate a service network element.

In this solution, the to-be-analyzed data sent by the fourth network element is received, where the to-be-analyzed data is determined by the fourth network element based on the token of the first network element, to implement fine-grained authorization management on the data from the second network element, and allocate different to-be-analyzed data to different first network elements.

In a possible implementation of the fourth aspect, the communication method further includes the following steps: receiving a token check request sent by the fourth network element; and sending a token check response to the fourth network element, where the token check response includes the token of the first network element.

In this solution, the first network element sends the token check response in response to the token check request of the fourth network element, and includes the token of the first network element in the token check response, so that the fourth network element can obtain the token of the first network element.

In a possible implementation of the fourth aspect, the communication method further includes the following steps: receiving a data analysis request sent by the fourth network element, where the data analysis request includes the identification information of the first network element, and the data analysis request is used to trigger the first network element to perform data analysis; and sending a data analysis request response to the fourth network element.

In this solution, the fourth network element determines, based on the identification information of the first network element, whether to accept the data analysis request, and includes, in the data analysis request response, information indicating whether to accept the data analysis request.

In a possible implementation of the fourth aspect, the data analysis request further includes a type of data that is expected to be analyzed for the second network element; and when the first network element does not support reading of the type of data that is expected to be analyzed, the data analysis request response includes a type of data that is unreadable by the first network element.

In this solution, the data analysis request response carries the type of data that is unreadable by the first network element, so that the second network element may re-adjust, according to a requirement, the type of data that is expected to be analyzed.

In a possible implementation of the fourth aspect, the communication method further includes the following step: sending a data subscription request to the fourth network element, where the data subscription request includes the identification information of the first network element, and the data subscription request is used to trigger the second network element to perform data collection.

In this solution, the fourth network element may obtain the identification information of the first network element by using the data subscription request sent by the first network element.

In a possible implementation of the fourth aspect, the receiving the to-be-analyzed data sent by the fourth network element specifically includes the following step: receiving the data analysis request sent by the fourth network element, where the data analysis request includes the to-be-analyzed data and the identification information of the first network element, and a data type of the to-be-analyzed data is a data type indicated by the first information.

In this solution, the to-be-analyzed data is carried in the data analysis request, so that the first network element obtains the to-be-analyzed data.

In a possible implementation of the fourth aspect, the communication method further includes the following step: sending a token registration request to the fourth network element, where the token registration request includes the identification information of the first network element and the token of the first network element.

In this solution, the first network element implements token registration by initiating the token registration request, so that the fourth network element can determine the to-be-analyzed data based on the token of the first network element.

In a possible implementation of the fourth aspect, the data type includes at least one of the following: load data of the service network element, resource utilization data of the service network element, abnormal event data of the service network element, or energy consumption data of the service network element.

In a possible implementation of the fourth aspect, the load data is from a network repository network element, or the resource utilization data and/or the abnormal event data is from an operation administration and maintenance network element.

According to a fifth aspect, this application further provides a communication method, applied to a communication system. The communication system includes a first network element and a fourth network element. The communication method includes the following steps: The fourth network element obtains identification information of the first network element; the fourth network element determines, based on a token of the first network element, to-be-analyzed data from a second network element, where the token corresponds to the identification information of the first network element, the token includes first information, the first information indicates a data type for which the first network element has read permission, and the to-be-analyzed data is used to evaluate a service network element; the fourth network element sends the to-be-analyzed data to the first network element; and the first network element receives the to-be-analyzed data.

In a possible implementation of the fifth aspect, that the fourth network element determines, based on the token of the first network element, the to-be-analyzed data from the second network element specifically includes the following step: The fourth network element determines the to-be-analyzed data based on the token and collected data of the second network element, where a data type of the to-be-analyzed data is a data type of all or a part of the collected data.

In a possible implementation of the fifth aspect, that the fourth network element obtains the identification information of the first network element specifically includes the following step: The fourth network element receives a data analysis request of the second network element, where the data analysis request includes the identification information of the first network element, and the data analysis request is used to trigger the first network element to perform data analysis.

In a possible implementation of the fifth aspect, the data analysis request further includes the collected data of the second network element and second information, where the second information indicates a data type of the collected data; and that the fourth network element determines, based on the token of the first network element, the to-be-analyzed data from the second network element specifically includes the following step: The fourth network element determines the to-be-analyzed data from the collected data based on the token and the second information, where the data type of the to-be-analyzed data is an intersection data type of a data type indicated by the token and the data type indicated by the second information.

In a possible implementation of the fifth aspect, after the fourth network element receives the data analysis request of the second network element, the communication method further includes the following steps: The fourth network element sends a token check request to the first network element; and the first network element sends a token check response to the fourth network element, where the token check response includes the token of the first network element.

In a possible implementation of the fifth aspect, after the fourth network element receives the data analysis request of the second network element, the communication method further includes the following steps: The fourth network element sends the data analysis request to the first network element; and the first network element sends a data analysis request response to the fourth network element. That the fourth network element determines, based on the token of the first network element, the to-be-analyzed data from the second network element specifically includes the following step: When the data analysis request response indicates that the first network element accepts the data analysis request, the fourth network element determines the to-be-analyzed data based on the token of the first network element.

In a possible implementation of the fifth aspect, the data analysis request further includes a type of data that is expected to be analyzed for the second network element; and when the first network element does not support reading of the type of data that is expected to be analyzed, the data analysis request response includes a type of data that is unreadable by the first network element.

In a possible implementation of the fifth aspect, that the fourth network element determines, based on the token of the first network element, the to-be-analyzed data from the second network element specifically includes the following steps: The fourth network element checks the token of the first network element; when a check result of the token is that the check is a pass, the fourth network element sends the data analysis request response to the second network element, where the data analysis request response includes the identification information of the first network element and the first information; and the second network element sends the to-be-analyzed data to the fourth network element, where the data type of the to-be-analyzed data is a data type indicated by the first information.

In a possible implementation of the fifth aspect, that the fourth network element sends the to-be-analyzed data to the first network element includes: The fourth network element checks the token of the first network element again; and when a check result of the token is that the check is a pass, the fourth network element sends the to-be-analyzed data to the first network element.

In a possible implementation of the fifth aspect, that the fourth network element obtains the identification information of the first network element specifically includes the following steps: The first network element sends a data subscription request to the fourth network element, where the data subscription request includes the identification information of the first network element, and the data subscription request is used to trigger the second network element to perform data collection; and the fourth network element receives the data subscription request.

In a possible implementation of the fifth aspect, that the fourth network element determines the to-be-analyzed data based on the token of the first network element specifically includes the following steps: The fourth network element checks the token of the first network element; when a check result of the token is that the check is a pass, the fourth network element sends the identification information of the first network element and the first information to the second network element; and the fourth network element receives a data analysis request of the second network element, where the data analysis request includes the to-be-analyzed data and the identification information of the first network element, and a data type of the to-be-analyzed data is a data type indicated by the first information.

In a possible implementation of the fifth aspect, that the fourth network element sends the to-be-analyzed data to the first network element specifically includes the following step: The fourth network element sends the data analysis request to the first network element.

In a possible implementation of the fifth aspect, that the fourth network element checks the token of the first network element specifically includes the following steps: The fourth network element sends the data subscription request to the second network element; the second network element sends a token query request to the fourth network element, where the token query request includes the identification information of the first network element; and the fourth network element checks the token of the first network element in response to the token query request.

In a possible implementation of the fifth aspect, the communication method further includes the following steps: The fourth network element receives a token registration request of the first network element, where the token registration request includes the identification information of the first network element and the token of the first network element; and the fourth network element stores the identification information of the first network element and the token of the first network element.

In a possible implementation of the fifth aspect, that the fourth network element stores the identification information of the first network element and the token of the first network element specifically includes the following steps: The fourth network element performs validity check on the token of the first network element; and when a check result of the validity check is that the check is a pass, the fourth network element stores the identification information of the first network element and the token of the first network element.

In a possible implementation of the fifth aspect, the data type includes at least one of the following: load-related data of the service network element, resource utilization data of the service network element, abnormal event data of the service network element, or energy consumption data of the service network element.

In a possible implementation of the fifth aspect, the load data is from a network repository network element, or the resource utilization data and/or the abnormal event data is from an operation administration and maintenance network element.

According to a sixth aspect, this application further provides a communication method, applied to a communication system. The communication system includes an authentication server and a first network element. The communication method includes the following steps: The authentication server receives a token issuance request of the first network element, where the token issuance request includes identification information of the first network element; and the first network element receives a token granting response sent by the authentication server, where the token granting response includes a token of the first network element, the token corresponds to the identification information of the first network element, the token includes first information, and the first information indicates a data type for which the first network element has read permission.

In this solution, the authentication server grants the token to the first network element in response to the token issuance request of the first network element, to indicate the type of data for which the first network element has read permission.

In a possible implementation of the sixth aspect, after the authentication server receives the token issuance request of the first network element, the communication method further includes the following steps: The authentication server sends a subscription information query request to a third network element, where the subscription information query request includes the identification information of the first network element; and the authentication server receives a subscription information response sent by the third network element, where the subscription information response includes a trust level and/or a service type of the first network element, where the token of the first network element is determined based on the identification information of the first network element and/or the subscription information response.

In a possible implementation of the sixth aspect, the token issuance request further includes third information, and the third information indicates a type of data that the first network element prefers to read; and the token of the first network element is determined based on at least one of the identification information of the first network element, the subscription information response, and the third information.

According to a seventh aspect, this application further provides a communication apparatus, including a module configured to perform the communication method according to any one of the first aspect to the sixth aspect.

According to an eighth aspect, this application further provides a communication apparatus, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the communication method according to any one of the first aspect to the sixth aspect by using a logic circuit or by executing code instructions.

According to a ninth aspect, this application further provides a computer-readable storage medium, where the storage medium stores a computer program or instructions, and when the computer program or the instructions are executed by a communication apparatus, the communication method according to any one of the first aspect to the sixth aspect is implemented.

According to a tenth aspect, this application further provides a computer program product including instructions. When the computer program product runs on a computer, the computer is caused to perform the communication method according to any one of the first aspect to the sixth aspect.

According to an eleventh aspect, this application further provides a chip. The chip includes a processor and a data interface, and the processor reads, through the data interface, instructions stored in a memory, to perform the communication method according to any one of the first aspect to the sixth aspect.

Optionally, in an implementation, the chip may further include the memory, the memory stores the instructions, the processor is configured to execute the instructions stored in the memory, and when the instructions are executed, the processor is configured to perform the communication method according to any one of the first aspect to the sixth aspect.

### BRIEF DESCRIPTION OF DRAWINGS

The following describes accompanying drawings used in embodiments of this application.
FIG. 1A is a schematic flowchart of collecting NF data in a plurality of aspects according to an embodiment of this application;
FIG. 1B is a diagram of a network architecture according to an embodiment of this application;
FIG. 1C is a diagram of token generation and use according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of another communication apparatus according to an embodiment of this application.

### DESCRIPTION OF EMBODIMENTS

The following describes technical solutions of this application with reference to the accompanying drawings.

In embodiments of this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, the words such as "example" or "for example" are intended to present a relative concept in a specific manner.

"At least one" in embodiments of this application means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. "And/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. Sequence numbers of steps (for example, step S1 and step S21) in embodiments of this application are merely used to distinguish between different steps. Sequence numbers of the steps do not mean execution sequences. The execution sequences of the processes should be determined based on functions and internal logic of the processes, and should not be construed as any limitation on the implementation processes of embodiments of this application.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first device and a second device are merely for ease of description, and do not indicate a difference of the first device and the second device in terms of a structure and a degree of importance. In some embodiments, the first device and the second device may alternatively be the same device.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

The method in embodiments of this application may be applied to a future communication network such as a long term evolution (long term evolution, LTE) system, a long term evolution-advanced (long term evolution-advanced, LTE-A) system, an enhanced long term evolution-advanced (enhanced long term evolution-advanced, eLTE) technology system, a new radio (New Radio, NR) system in a 5th generation (5th Generation, 5G) mobile communication system, or a 6th generation (6th Generation, 6G) mobile communication system, or may be extended to a similar wireless communication system such as a cellular system related to wireless fidelity (Wireless Fidelity, Wi-Fi), worldwide interoperability for microwave access (worldwide interoperability for microwave access, WIMAX), and a 3rd generation partnership project (3rd generation partnership project, 3GPP).

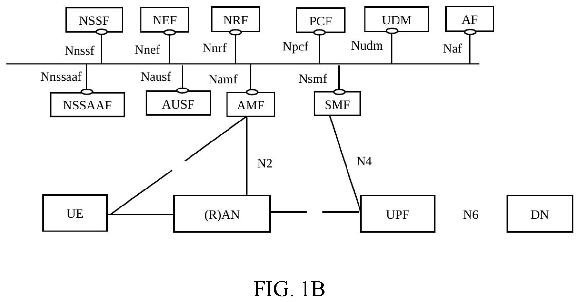

FIG. 1B shows a network architecture applied to an embodiment of this application. Network elements that may be used in the network architecture are separately described.
1. Terminal device: is briefly referred to as a terminal, is also referred to as user equipment (user equipment, UE), and may include various handheld devices that have a wireless communication function, vehicle-mounted devices, wearable devices, internet of things terminal devices, computing devices, or other processing devices connected to a wireless modem, and various forms of terminals like a mobile station (mobile station, MS), a terminal (terminal), a soft terminal, an access terminal, a terminal device unit (subscriber unit), a terminal device station, a mobile station (mobile station, MS), a remote station, a remote terminal, a mobile device, a terminal device proxy, and a terminal device apparatus. For example, the terminal device may be a water meter, an electricity meter, a sensor, or the like.
2. Radio access network (Radio Access Network, (R)AN): is a device that provides wireless access for a terminal device. For example, the radio access network includes a plurality of (R)AN nodes, and may implement a radio physical layer function, resource scheduling and radio resource management, radio access control, and a mobility management function. The (R)AN is connected to a user plane network element through a user plane interface N3, to transmit data of a terminal device. The (R)AN establishes a control plane signaling connection to an access and mobility management network element through a control plane interface N2, to implement a function such as radio access bearer control.

Specifically, the (R)AN may be configured to provide a network access function for an authorized terminal device in a specific area, and can use transmission tunnels with different quality based on a level of the terminal device, a service requirement, and the like.

The (R)AN can manage a radio resource, and provide an access service for the terminal device, to further complete forwarding of a control signal and data of the terminal device between the terminal device and a core network.

The radio access network may have any one of the following alternative words: an access network device and an access network (Access Network, AN). The access network device may be a base station, a continuously evolved NodeB (gNB), an evolved NodeB (Evolved NodeB, eNB), a transmission and reception point (Transmission Reception Point, TRP), a central unit (Central Unit, CU) node, a distribution unit (Distributed Unit, DU) node, a transmission point (Transmission Point, TP), a receiving point (Receiving Point, RP), a wireless access point (Access Point, AP), a world interoperability for microwave access (World Interoperability for Microwave Access, WiMAX) base station, or the like. This is not limited. In this application, the radio access network is described by using a base station as an example, and a function performed by the base station is also applicable to another replacement word of the radio access network.

3. User plane network element: is mainly responsible for processing a user packet, for example, forwarding and charging.

In a 5G communication system, the user plane network element may be a user plane function (user plane function, UPF) network element. In a future communication system, the user plane network element may still be the UPF network element, or may have another name. This is not limited in this application.

The UPF mainly provides a service processing function of a user plane. As an anchor point of a protocol data unit (protocol data unit, PDU) session connection, the UPF is responsible for data packet filtering, service routing, packet forwarding, an anchor function, rate control, generation of charging information, QoS (Quality of Service, QoS) mapping and execution, identification and routing of an uplink identifier to a data network, notification triggering of downlink packet buffering and downlink data arrival, a connection to an external data network, and the like of user equipment.

4. Data network: is configured to provide a network for data transmission.

In a 5G communication system, the data network may be a data network (data network, DN). In a future communication system, the data network may still be the DN, or may have another name. This is not limited in this application.

For example, UE accesses the data network by establishing a session between the UE and the DN via a RAN and a UPF.

5. Network slice-specific authentication and authorization network element: is mainly responsible for authentication and authorization of a network slice, and may interact with an authentication, authorization, and accounting server (Authentication, Authorization, and Accounting Server, AAA-S) by using an authentication, authorization, and accounting proxy (Authentication, Authorization, and Accounting Proxy, AAA-P).

In a 5G communication system, the network slice-specific authentication and authorization network element may be a network slice-specific authentication and authorization function (The Network Slice-Specific Authentication and Authorization Function, NSSAAF) network element. In a future communication system, the network slice-specific authentication and authorization network element may still be the NSSAAF network element, or may have another name. This is not limited in this application.

6. Authentication service network element: is configured to perform security authentication on UE when the UE accesses a network.

In a 5G communication system, the authentication service network element may be an authentication server function (authentication server function, AUSF) network element. In a future communication system, the authentication service network element may still be the AUSF network element, or may have another name. This is not limited in this application.

The 5G communication system is used as an example. For example, the AUSF receives a request of an AMF for performing identity authentication on the UE, requests a key from a UDM, and forwards, to the AMF for authentication processing, the key delivered by the UDM.

7. Access and mobility management function network element: is mainly configured to perform mobility management, access management, and the like, and may be configured to implement a function in a mobility management entity (Mobility Management Entity, MME) function other than session management, for example, functions such as user location update, user registration with a network, and user handover.

In a 5G communication system, the access and mobility management function network element may be an access and mobility management function (access and mobility management function, AMF) network element. In a future communication system, the access and mobility management function network element may still be the AMF network element, or may have another name. This is not limited in this application.

The AMF is mainly responsible for functions such as UE authentication, UE mobility management, network slice selection, and session management network element selection; serves as an anchor of an N1 and N2 signaling connection and provides routing of an N1/N2 session management (session management, SM) message for a session management network element; and maintains and manages status information of UE.

8. Session management network element: is mainly configured for session management (such as session establishment, modification, and release), allocation and management of a terminal device internet protocol (Internet Protocol, IP) address, selection of an endpoint that can manage a user plane function interface and a policy control and charging function interface, downlink data notification, and the like. Specific functions are, for example, allocating an IP address to a user or selecting a UPF that provides a packet forwarding function.

In a 5G communication system, the session management network element may be a session management function (session management function, SMF) network element. In a future communication system, the session management network element may still be the SMF network element, or may have another name. This is not limited in this application.

The SMF is mainly responsible for all control plane functions of UE session management, including user plane network element selection, IP address allocation, session QoS management, obtaining of policy and charging control (policy and charging control, PCC) information (from a policy control network element), and the like.

9. Network slice selection network element: is configured to: select a slice instance set for UE, and determine an AMF set and allowed NSSAI for the UE. (NSSAI is short for network slice selection assistance information, that is, network slice selection assistance information/network slice selection assistance information. A network slice is uniquely identified by single S-NSSAI, and a set of one or more pieces of S-NSSAI is referred to as NSSAI.)

In a 5G communication system, the network slice selection network element may be a network slice selection function (network slice selection function, NSSF) network element. In a future communication system, the network slice selection network element may still be the NSSF network element, or may have another name. This is not limited in this application.

10. Network capability exposure network element: is configured for connection and interaction between another internal network element of a core network and an external application server of the core network, to provide network capability information for the external application server, or provide information about the external application server for the core network element.

In a 5G communication system, the network capability exposure network element may be an NEF network element. In a future communication system, the network capability exposure network element may still be the NEF, or may have another name. This is not limited in this application.

11. Network repository network element: is responsible for performing registration, state monitoring, and the like on a network function service, to implement automatic management, selection, and scalability of the network function service, and allow each network function to discover a service provided by another network function; and is for registration, management, and state detection of a network function (Network Function, NF) to implement automatic management of all NFs. When each NF is started, the NF needs to be registered with a NRF to provide a service. Registration information includes a type, an address, a service list of the NF, and the like.

In a 5G communication system, the network repository network element may be an NRF network element. In a future communication system, the network repository network element may still be the NRF, or may have another name. This is not limited in this application.

12. Policy control network element: is a unified policy framework used to govern a network behavior, provides configuration policy information for UE, and provides policy rule information, and the like for a control plane function network element (for example, an AMF or an SMF network element).

In a 5G communication system, the policy control network element may be a policy control function (policy control function, PCF) network element. In a future communication system, the policy control network element may still be the PCF network element, or may have another name. This is not limited in this application.

13. Data management network element: is configured for terminal device identification handling, access authorization, registration, mobility management, and the like.

In a 5G communication system, the data management network element may be a unified data management (unified data management, UDM) network element. In a future communication system, the data management network element may still be the UDM network element, or may have another name. This is not limited in this application.

The UDM network element mainly manages and controls user data, such as subscription information and authentication/authorization information, including obtaining subscription information from a data repository and providing the subscription information to another network element (for example, an AMF), generating a 3GPP authentication credential for UE, and registering and maintaining a network element currently serving the UE.

14. Application service network element: interacts with a core network element to provide some services, for example, interacts with a policy control network element to perform service policy control, interacts with a network capability exposure network element to obtain some network capability information or provide some application information to a network, and provides some data network access point information to the policy control network element to generate routing information of a corresponding data service.

In a 5G communication system, the application service network element may be an application service function (Application Function, AF) network element. In a future communication system, the application service network element may still be the AF network element, or may have another name. This is not limited in this application. For example, the application service network element may have any one of the following replacement words: an application server (Application server, AS), an AF, a third party, a third-party application, an application (Application, APP), and the like.

It should be noted that the foregoing "network element" may also be referred to as an entity, a device, an apparatus, a module, or the like, and there is no particular limitation in this application herein. In addition, in this application, for ease of understanding and description, descriptions of "network element" are omitted in some descriptions. For example, the AMF network element is referred to as an AMF for short. In this case, the "AMF" should be understood as an AMF network element or an AMF entity. Descriptions of same or similar cases are omitted below.

The network architecture may further include a network data analytics network element, configured to analyze various types of network data, including network running data collected from an NF, terminal-related statistical data and network-related statistical data obtained from an OAM network element, and application data obtained from a third-party AF. A data analysis result generated by a NWDAF is also output to the NF, the OAM, or the third-party AF. Specific working steps of the network data analytics network element may be classified into several types, including request analysis, subscription analysis, data collection, and the like.

In a 5G communication system, the network data analytics network element may be a network data analytics function (network data analytics function, NWDAF) network element. In a future communication system, the network data analytics network element may still be the NWDAF, or may have another name. This is not limited in this application.

The network architecture may further include an operation administration and maintenance (operation administration and maintenance, OAM) network element. The OAM network element classifies network management work into three categories: operation (operation), administration (administration), and maintenance (maintenance) according to an actual requirement of network operation of an operator. The operation is mainly to complete routine analysis, prediction, planning, and configuration for a network and a service, and the maintenance is mainly routine operation activities such as network and service tests and fault management.

In a 5G communication system, the operation administration and maintenance network element may be an OAM network element, or generally refer to a network management device. In a future communication system, the operation administration and maintenance network element may still be the OAM, or may have another name. This is not limited in this application.

The network architecture may further include an external operator managed network element, configured to evaluate, based on data, whether a service network element is abnormal.

In a 5G communication system, the external operator managed network element may be an external operator managed (External Operator Managed Function, EOMF) network element. In a future communication system, the external operator managed network element may still be the EOMF network element, or may have another name. This is not limited in this application.

The network architecture may further include an authentication server (Authentication Server). The authentication server may be a service function such as an AUSF network element, an NRF network element, or a third-party authentication server located inside a core network, or may be a network element outside an operator, for example, an external AF.

It should be understood that the network architecture applied to embodiments of this application is merely an example of a network architecture described from a perspective of a service-based architecture, and a network architecture applicable to embodiments of this application is not limited thereto. Any network architecture that can implement functions of the foregoing network elements is applicable to embodiments of this application.

For example, in some network architectures, network function entities such as the AMF, the SMF, the PCF, and the UDM are all referred to as NF network elements. Alternatively, in some other network architectures, a set of network elements such as the AMF, the SMF, the PCF, and the UDM may be referred to as a control plane function (Control Plane Function, CPF) network element.

The following uses network elements in a 5G system as an example to describe details of a solution in detail. It may be understood that, when the solution is applied to an LTE system or a future communication system, each network element in the solution may be replaced with another network element having a corresponding function. This is not limited in this application.

It should be understood that FIG. 1B is merely an example of a network architecture, and a network architecture applicable to embodiments of this application is not limited thereto. Any network architecture that can implement functions of the foregoing network elements is applicable to embodiments of this application.

The following describes a specific process of token (Token) generation and use.

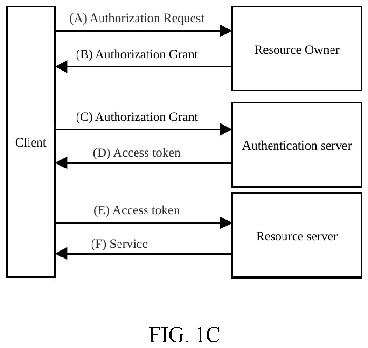

Refer to FIG. 1C. FIG. 1C is a diagram of token generation and use according to an embodiment of this application. The following steps are specifically included.
(A) A client requests authorization from a resource owner. The authorization request may be sent directly to the resource owner (as shown in FIG. 1C) or indirectly via an authentication server acting as an intermediary.
(B) The client receives an authorization grant, which is a credential representing the authorization of the resource owner, for example, represented by one of four grant types defined in the International Internet Engineering Task Force (The Internet Engineering Task Force, IETF) specification or an extended grant type. An authorization grant type depends on a method used by the client to request the authorization and a type supported by the authentication server.
(C) The client requests an access token by performing identity authentication with the authentication server and providing the authorization grant.
(D) The authentication server performs identity authentication on the client and authenticates the authorization grant. If the authorization grant is valid, the authentication server issues the access token.
(E) The client requests a protected resource from a resource server and provides the access token for identity authentication.
(F) The resource server verifies the access token. If the token is valid, the resource server provides a service for the request.

Refer to the procedure shown in FIG. 1A. The NWDAF serves as a data collection agent, and provides collected data to an operator function outside a 3GPP domain through an NEF. However, the NEF can only send all data to an EOMF for analysis, and cannot perform fine-grained analysis and authorization check on data that can be read by the EOMF. Therefore, embodiments of this application provide a communication method, to perform fine-grained authorization on data used to evaluate a service network element.

The following specifically describes the communication method in embodiments of this application.

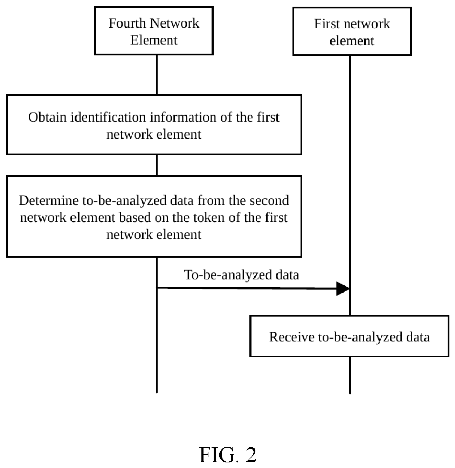

FIG. 2 is a schematic flowchart of a communication method according to an embodiment of this application. The communication method in this embodiment of this application includes the following steps:
201: A fourth network element obtains identification information of a first network element.

Specifically, in this embodiment of this application, the fourth network element is an intermediary or a gateway device between the first network element and a second network element. For example, the fourth network element is an NEF network element, a security edge protection proxy (Security Edge Protection Proxy, SEPP), a service communication proxy (Service Communication Proxy, SCP), or the like. In this embodiment of this application, an example in which the fourth network element is the NEF network element is used for description.

The first network element is configured to evaluate a service network element. For example, the first network element is an external operator managed network element. In this embodiment of this application, an example in which the first network element is the external operator managed network element is used for description. The service network element is a network element that bears a terminal service. For example, the service network element is an SMF network element or an (R)AN. The first network element may evaluate a security status of the SMF network element, or evaluate energy consumption of the (R)AN, or the like.

The second network element is configured to collect data of the service network element. For example, the second network element is a network data analytics network element. In this embodiment of this application, an example in which the second network element is the network data analytics network element is used for description.

For example, the identification information of the first network element may be at least one of the following: a name of the first network element, an identifier of a network function instance of the first network element, a device number of the first network element, or an IP address of the first network element.

202: The fourth network element determines, based on a token of the first network element, to-be-analyzed data from the second network element.

Specifically, the token corresponds to the identification information of the first network element. Because the identification information of the first network element corresponds to the token, the fourth network element may determine the token of the first network element based on the identification information of the first network element. For a specific process of determining the token, refer to related descriptions in the following Embodiment 1 to Embodiment 4. Details are not described herein.

The token of the first network element includes first information, and the first information indicates a data type for which the first network element has read permission. Therefore, the to-be-analyzed data sent to the first network element may be determined based on the token of the first network element.

For example, the first information may directly or indirectly indicate the type of data for which the first network element has read permission. The first information may be at least one of the following: a data type indication, a data type description, or a data type tag (Tag). The type of data includes at least one of the following: load data of the service network element, resource utilization data of the service network element, abnormal event data of the service network element, or energy consumption data of the service network element.

For example, a data type indication "0" corresponds to the load data of the service network element, a data type indication "1" corresponds to the resource utilization data of the service network element, a data type indication "2" corresponds to the abnormal event data of the service network element, and a data type indication "3" corresponds to the energy consumption data of the service network element.

The data type description is description content of the type of data. For example, the load data of the service network element may be described as "service load", the "resource utilization data of the service network element" may be described as "resource utilization", the "abnormal event data of the service network element" may be described as an "abnormal event", and the "energy consumption data of the service network element" may be described as "energy consumption".

The data type tag directly or indirectly indicates a data type of the data, and the indirect indication means that the data can only be known by reading the data. For example, the data type tag may be an event identifier (Event ID), and the event identifier is a specific collection task indication. For example, if a NWDAF collects data in an event subscription form, result data of one or more events may be obtained through aggregation, and an event identifier is carried in the data in this manner.

For example, collected central processing unit (Central Processing Unit, CPU) data of a network element corresponds to an event ID 10001, and collected graphics processing unit (Graphics Processing Unit, GPU) data of the network element corresponds to an event ID 10003. The CPU data and the GPU data are resource utilization data. A collection task that uses the event ID can implicitly correspond to a data type.

For another example, when the event ID is 10001, user plane load data is collected; and when the event ID is 10003, signaling plane load data is collected. The user plane load data and the signaling plane load data may implicitly correspond to the data type indication 0 and the data type description "service load".

For another example, when the event ID is 10004, user plane energy consumption data is collected; and when the event ID is 10005, signaling plane energy consumption data is collected. The user plane energy consumption data and the signaling plane energy consumption data may implicitly correspond to the data type indication 3 and the data type description "energy consumption".

For another example, when the Event ID is 10004, energy consumption data of a data radio bearer (Data Radio Bearer, DRB) is collected; and when the Event ID is 10005, energy consumption data of a signaling radio bearer (Signaling Radio Bearer, SRB) is collected. The energy consumption data of the data radio bearer and the energy consumption data of the signaling radio bearer may implicitly correspond to the data type indication 3 and the data type description "energy consumption".

The to-be-analyzed data is used to evaluate the service network element. The to-be-analyzed data is obtained by the second network element through collection.

In a possible implementation, the load data is from a network repository network element, or the resource utilization data and/or the abnormal event data is from an operation administration and maintenance network element. For example, the second network element collects the load data of the service network element from the network repository network element, or the second network element collects the resource utilization data and/or the abnormal event data of the service network element from the operation administration and maintenance network element.

203: The fourth network element sends the to-be-analyzed data to the first network element.

Correspondingly, the first network element receives the to-be-analyzed data.

In this embodiment of this application, the fourth network element first obtains the identification information of the first network element. Because the identification information of the first network element corresponds to the token, the token of the first network element may be determined based on the identification information of the first network element. Then, the to-be-analyzed data sent to the first network element is determined based on the token of the first network element, to perform fine-grained authorization management on the data from the second network element, and allocate different to-be-analyzed data to different first network elements.

The following specifically describes possible communication methods in embodiments of this application by using Embodiment 1 to Embodiment 4.

### Embodiment 1

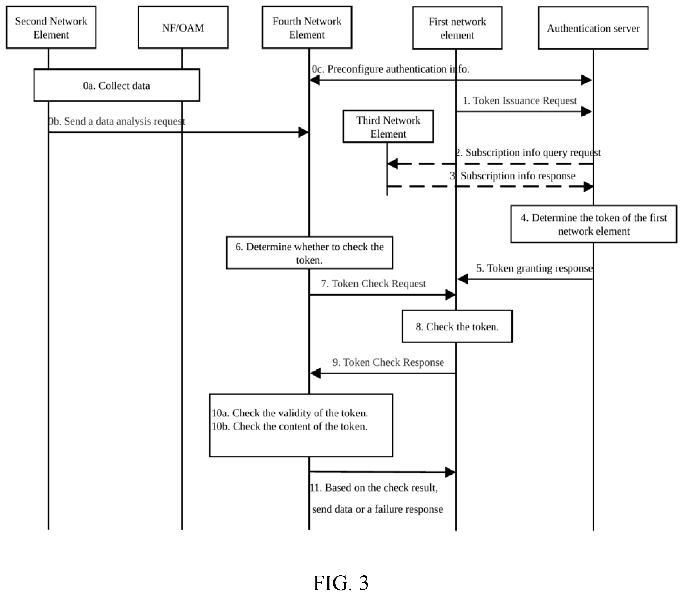

FIG. 3 is a schematic flowchart of another communication method according to an embodiment of this application. The communication method includes the following steps:

0a: A second network element collects data.

Specifically, a target of collecting the data by the second network element may be one service network element (for example, one AMF network element instance), or may be a plurality of service network elements, for example, a plurality of network elements of a same type (for example, a plurality of AMF network elements), or all types of network elements in an area. This is not limited herein.

In addition, the second network element may obtain the collected data from an NF (that is, the service network element), an NRF network element, an OAM network element, or the like.

0b: The second network element sends a data analysis request to a fourth network element.

In a possible implementation, the data analysis request includes identification information of a first network element, and the data analysis request is used to trigger the first network element to perform data analysis.

Correspondingly, the fourth network element receives the data analysis request. The fourth network element may obtain the identification information of the first network element based on the data analysis request.

In another possible implementation, the data analysis request further includes the collected data of the second network element and second information. The second information indicates a data type of the collected data.

Specifically, the data analysis request carries the collected data. In this way, the collected data may be exposed to an external network element, for example, the first network element, through the fourth network element. The data type indicated by the second information includes at least one of the following: load data of the service network element, resource utilization data of the service network element, abnormal event data of the service network element, or energy consumption data of the service network element. For example, the second information may be a data type and/or a data type tag. Specific manners of indicating the data type by the first information and the second information are the same. For example, both the first information and the second information are data type tags.

0c: The fourth network element preconfigures authentication information with an authentication server.

Specifically, the authentication information includes a certificate, a key, or the like. The authentication server is configured to issue a token to the first network element. The fourth network element has a capability of verifying the token of the first network element, and the authentication information needs to be used for verifying the token. Therefore, the authentication information needs to be configured in advance.

Step 0c and the previous steps are not listed in sequence, and Step 0c may be performed before, between, or after step 0a and step 0b. Another step may also be inserted between step 0c, and step 0a and step 0b.

1: The first network element sends a token issuance request to the authentication server.

Specifically, in a possible implementation, the token issuance request includes the identification information of the first network element. Correspondingly, the authentication server receives the token issuance request of the first network element.

In another possible implementation, the token issuance request further includes third information, and the third information indicates a type of data that the first network element prefers to read. The third information may directly or indirectly indicate the type of data that the first network element prefers to read. For example, the third information may be in at least one of the following forms: a data type indication, a type description of preferred data to be read, a data type tag (for example, an Event ID), or the like. A specific form of the third information is the same as a specific form of the second information in 0b. The following Table 1 is used as an example.

**Table 1 Schematic table of the data type indication**

| Event ID | Data type indication | Type description of the data |
|---|---|---|
| 10001 and 10003 | 1 | Resource utilization |
| 10002 | 2 | Abnormal event |
| 10004 | 0 | Service Load |
| 10005 | 3 | Power consumption |
| ... | ... | ... |

For example, referring to Table 1, when the event ID is 10001, CPU data is correspondingly collected; and when the event ID is 10003, GPU data is correspondingly collected. In this case, the CPU data and the GPU data may implicitly correspond to the data type indication 1 and the data type description "resource utilization". 2: The authentication server sends a subscription information query request to a third network element.

Correspondingly, the third network element receives the subscription information query request. The third network element may be a data management network element.

Specifically, the subscription information query request includes the identification information of the first network element, and query content is, for example, a subscribed service range or a trust level of the first network element. The authentication server may determine, based on the content, a type of the token issued to the first network element.

Step 2 is optional. If the authentication server does not need subscription information to assist in determining, or has subscription information cache of the first network element, the authentication server may not send the subscription information query request.

3: The third network element sends a subscription information response to the authentication server.

Corresponding to step 2, step 3 is optional. The subscription information response includes the trust level and/or a service type of the first network element.

4. The authentication server determines the token of the first network element.

Specifically, the authentication server determines the token of the first network element based on at least one of the identification information of the first network element, the subscription information response, and the third information. The authentication server determines the type and a range of the token issued to the first network element. The token includes a first information field, and may directly or indirectly indicate a data type for which the first network element has read permission.

In a possible implementation, the authentication server may determine the token of the first network element based on the identification information of the first network element. In addition, the authentication server may determine a name of the first network element based on the identification information of the first network element, and the authentication server may determine the token of the first network element based on the name of the first network element. The authentication server may determine the token of the first network element based on the subscription information response. The authentication server may further determine the token of the first network element based on the third information, for example, directly issue the token to the first network element based on the type that is of preferred data to be read and that is indicated by the third information. The authentication server may further determine the token of the first network element based on the identification information of the first network element and the subscription information response. The authentication server may further determine the token of the first network element based on the identification information of the first network element and the third information. The authentication server may further determine the token of the first network element based on the subscription information response and the third information. The authentication server may further determine the token of the first network element based on the identification information of the first network element, the subscription information response, and the third information.

In another possible implementation, the authentication server may alternatively determine the token of the first network element according to a preconfigured rule. For example, the token is issued as long as there is the token issuance request. The token indicates that the type of data for which read permission exists may be preset, and the preset data type of the token is, for example, the load-related data of the service network element.

In another possible implementation, the authentication server determines the token of the first network element according to the preconfigured rule and the at least one of the identification information of the first network element, the subscription information response, and the third information. For example, the authentication server determines the token of the first network element based on the third information and the preconfigured rule. The third information indicates that the type of data that the first network element prefers to read is the load-related data of the service network element, the resource utilization-related data of the service network element, and the abnormal event-related data of the service network element; and the preconfigured rule is not issuing a token in which there is read permission for a data type of the abnormal event-related data of the service network element. In this case, the authentication server issues, to the first network element, a token indicating read permission for the load-related data of the service network element and the resource utilization-related data of the service network element.

5. The authentication server sends a token granting response to the first network element.

Correspondingly, the first network element receives the token granting response sent by the authentication server.

The token granting response includes the token of the first network element. The token corresponds to the identification information of the first network element, the token includes the first information, and the first information indicates the type of data for which the first network element has read permission.

For example, the token may be one or more of the following: an open authorization (Open Authentication, Oauth) token (for example, an OAuth 2.0 token), a certificate, one-time code (Code), or the like. Alternatively, the token may be in another form. This is not uniquely limited in this application.

Tokens in different embodiments may be in different forms. For example, the token in Embodiment 1 is the Oauth token, a token in Embodiment 2 is a certificate, and tokens in Embodiment 3 and Embodiment 4 are one-time code. This is not uniquely limited.

6. The fourth network element determines whether to check the token.

Specifically, the fourth network element determines, based on the identification information of the first network element in the data analysis request, whether there is a token check record of the first network element locally. In a possible implementation, if there is the historical token check record of the first network element, the token of the first network element is not checked, and step 10b is performed. In another possible implementation, if there is the historical token check record of the first network element and the token does not expire, the token of the first network element is not checked, and step 10b is performed. In another possible implementation, if there is no token check record of the first network element, step 7 is triggered.

7: The fourth network element sends a token check request to the first network element.

Optionally, the token check request includes the second information.

8: The first network element checks the token.

Specifically, in a possible implementation, if the second information is not carried in step 7, the first network element determines, according to a configuration rule of the first network element, whether to report the token in a token check response. For example, the first network element only needs to check whether there is a token locally, and does not need to consider type correspondence. If the first network element has the token locally, the token check response carries the token of the first network element.

In another possible implementation, if the second information is carried in step 7, the first network element determines whether the first network element has the token of the data type indicated by the second information, and if the first network element has the token of the data type indicated by the second information, the corresponding token is carried in the token check response. If the first network element does not have the token of the data type indicated by the second information, the first network element is triggered to perform step 1 to step 5, and then perform step 8. It can be learned that the token issuance procedure (that is, step 1 to step 5) may be performed before step 8, or may be triggered and performed in step 8.

In another implementation, in addition to the token, the token check response may further carry the first information.

9: The first network element sends the token check response to the fourth network element.

Correspondingly, the fourth network element receives the token check response.

In a possible implementation, the fourth network element may obtain the token of the first network element from the token check response. In another possible implementation, the fourth network element may obtain the first information from the token check response.

10a: The fourth network element checks validity of the token.

Specifically, the authentication information preconfigured in step 0c is for checking the validity of the token of the first network element by the fourth network element. In a possible implementation, if the validity check is passed, step 10b is performed. In another possible implementation, if the validity check result is a failure, the fourth network element sends a failure response to the first network element, where the failure response includes a failure cause.

For example, if the token of the first network element is protected by using a signature of the authentication server, the fourth network element performs integrity check on the token, for example, verifies the signature again by using the certificate. If the signature verification is passed, the fourth network element considers that the token is complete and valid. For another example, the fourth network element decrypts the token by using the key, and if the decryption succeeds, the fourth network element considers that the token is complete and valid.

10b: The fourth network element checks content of the token.

Specifically, the fourth network element checks the content of the token, and determines to-be-analyzed data based on the token and the collected data of the second network element. A data type of the to-be-analyzed data is a data type of all or a part of the collected data. That is, the to-be-analyzed data may be all or a part of the collected data.

In a possible implementation, the fourth network element determines, based on the token of the first network element and the second information, and according to the preconfigured rule, the to-be-analyzed data to be sent to the first network element. The first network element prunes, according to the preconfigured rule, the collected data if an intersection exists between the data type indicated by the token and the data type indicated by the second information, and sends only data corresponding to a data type of the intersection; or if the data type indicated by the token does not completely match the data type indicated by the second information, it is considered that the content check fails.

The fourth network element determines the to-be-analyzed data from the collected data based on the token and the second information. The data type of the to-be-analyzed data is the data type of the intersection between the data type indicated by the token and the data type indicated by the second information. Data type comparison is performed based on the second information carried in the data analysis request and the token, to determine the to-be-analyzed data. The data type of the intersection may be the data type indicated by the token or a part of data types in the data type indicated by the token. If there is no data type of the intersection, a content check result is failure. For example, if it is determined, based on Table 1 and the token, that the first network element has the reading permission for data whose data type indications are 0, 1, and 2, but the second information in step 0b indicates that the collected data includes data whose data type indications are 1, 2, and 3, the fourth network element reserves data whose data type indications are 1 and 2, and prunes other data in the collected data to obtain the to-be-analyzed data.

For another example, if it is determined, based on Table 1 and the token, that the first network element has the reading permission on the data whose data type indications are 0, 1, and 2, but the second information in step 0b indicates that the collected data includes the data whose data type indications are 1, 2, and 3, the fourth network element determines that a check result of the content of the token is a failure.

In another possible implementation, when determining that the token does not need to be checked in step 6, the fourth network element determines the to-be-analyzed data based on the token in a historical check result and the collected data. For a method for determining the to-be-analyzed data based on the token and the collected data, refer to the foregoing related descriptions.

11: Send the data or the failure response based on the check result.

Specifically, when it is determined in step 6 that the token needs to be checked, it is determined, based on the check results in step 10a and step 10b, to send the to-be-analyzed data or the failure response to the first network element. In a possible implementation, when the check results in step 10a and step 10b are both a pass, the fourth network element sends the to-be-analyzed data to the first network element. In another possible implementation, when the check result in step 10a or step 10b is not a pass, the fourth network element sends the failure response to the first network element, where the failure response includes the failure cause.

When the token does not need to be checked in step 6, it is determined, based on the check result in step 10b, to send the to-be-analyzed data or the failure response to the first network element. In a possible implementation, when the check result in step 10b is a pass, the fourth network element sends the to-be-analyzed data to the first network element. In another possible implementation, when the check result in step 10b is not a pass, the fourth network element sends the failure response to the first network element, where the failure response includes the failure cause.

In Embodiment 1, for first network elements with different trust levels, the fourth network element tailors, based on the token of the first network element, the collected data of the second network element, and exposes only a part of the data to the first network element for processing. For different first network elements, the fourth network element may perform fine-grained authorization control, to ensure security of a communication network.

### Embodiment 2

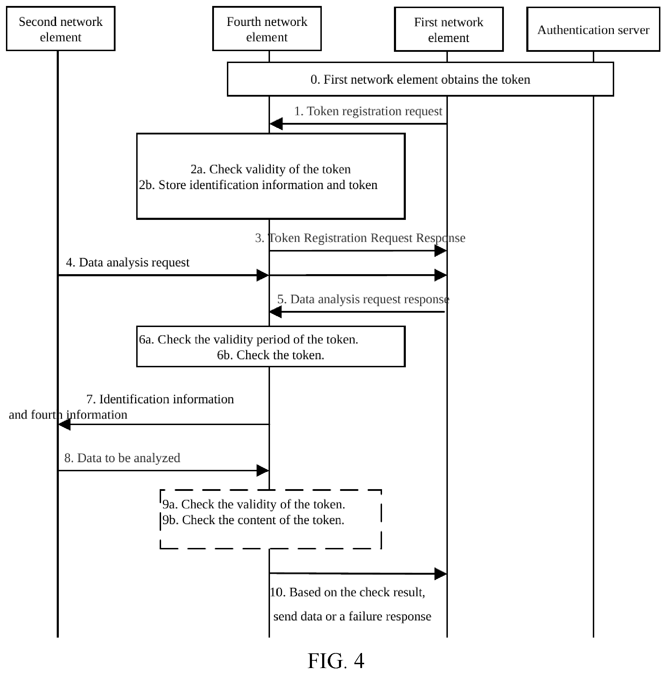

FIG. 4 is a schematic flowchart of another communication method according to an embodiment of this application. The communication method includes the following steps:

0: A first network element obtains a token.

Specifically, before step 1, the first network element obtains the token of the first network element, and a specific token obtaining method is not limited. For example, the token of the first network element may be obtained according to step 0c to step 5 in Embodiment 1.

1: The first network element sends a token registration request to a fourth network element.

Correspondingly, the fourth network element receives the token registration request of the first network element.

In an implementation, the token registration request includes identification information of the first network element and the token of the first network element.

In another implementation, the token registration request includes the identification information of the first network element and token information of the first network element. The token information is related information of the token of the first network element, for example, identification information of the token.

2a: The fourth network element checks validity of the token.

Specifically, in a possible implementation, refer to checking the validity of the token in step 10a in Embodiment 1. The fourth network element performs validity check on the token of the first network element. When a check result of the validity check is that the check is a pass, step 2b is performed. In another possible implementation, when the check result of the validity check is not a pass, a token registration result is a failure, and the fourth network element sends a registration request response to the first network element, where the registration request response includes a registration failure cause.

In an implementation, the fourth network element may obtain the token of the first network element based on the token information of the first network element, and then check the validity of the token. For example, the first network element obtains the token from an authentication server, the first network element sends the identification information of the token to the fourth network element for registration, and after receiving the identification information of the token, the fourth network element may obtain the token of the first network element from the authentication server by using the identification information.

2b: The fourth network element stores the identification information of the first network element and the token of the first network element.

Specifically, in an implementation, the fourth network element records the identification information of the first network element and the token of the first network element (for example, 2b in FIG. 4). In another implementation, the fourth network element records the identification information of the first network element and the token information of the first network element.

In this embodiment of this application, before the identification information and the token (or the token information) of the first network element are stored, validity check is performed on the token of the first network element. The identification information of the first network element and the token (or the token information) of the first network element are stored only when the validity check is passed, to ensure the validity of the token (or the token information) that needs to be registered.

3: The fourth network element sends the registration request response to the first network element.

Correspondingly, the first network element receives the registration request response.

Specifically, the registration request response indicates the token registration result. When the registration fails, the registration request response includes the registration failure cause.

4: A second network element sends a data analysis request to the fourth network element.

Correspondingly, the fourth network element receives the data analysis request of the second network element.

In a possible implementation, the data analysis request includes the identification information of the first network element, and the data analysis request is used to trigger the first network element to perform data analysis. The fourth network element may obtain the identification information of the first network element by using the data analysis request.

The data analysis request may be sent once or periodically. When the data analysis request is sent periodically, the data analysis request is an analysis subscription request.

In another possible implementation, the data analysis request further includes a type of data that is expected to be analyzed for the second network element.

Further, the fourth network element sends the data analysis request to the first network element. Correspondingly, the first network element receives the data analysis request sent by the fourth network element.

Step 1 to step 3 and step 4 are not necessarily consecutive. Step 1 to step 3 may be performed before or after the data analysis request is sent. This is not limited herein. For example, step 1 to step 3 may be performed before step 5, and step 4 triggers execution of step 1 to step 3.

5: The first network element sends a data analysis request response to the fourth network element.

Correspondingly, the fourth network element receives the data analysis request response.

Specifically, in a possible implementation, when determining, according to a preconfigured rule and/or based on the type of data that is expected to be analyzed for the second network element, that the first network element cannot respond to the data analysis request of the second network element, the first network element includes, in the data analysis request response, a reason why the first network element cannot respond to the data analysis request. For example, the preconfigured rule is determining, based on the identification information and/or a name of the first network element, whether to respond to the data analysis request of the second network element. The fourth network element forwards the data analysis request response to the second network element.

In another possible implementation, when the data analysis request carries the type of data that is expected to be analyzed for the second network element, and the first network element determines that the first network element does not support reading of the type of the data that is expected to be analyzed, the data analysis request response includes a type of data that is unreadable by the first network element. In this case, the fourth network element forwards the data analysis request response to the second network element, to indicate the second network element to re-adjust, according to a requirement, the type that is of data expected to be analyzed and that is carried in the data analysis request.

In another possible implementation, when determining, according to the preconfigured rule and/or based on the type of data that is expected to be analyzed for the second network element, that the first network element can respond to the data analysis request of the second network element, the first network element includes the identification information of the first network element in the data analysis request response; and step 6a is performed.

6a: The fourth network element checks a validity period of the token.

When the data analysis request response indicates that the first network element accepts the data analysis request, the fourth network element determines to-be-analyzed data based on the token of the first network element, and checks a data reading permission of the first network element based on the token, to ensure data security.

Specifically, a token registration record is first checked based on the identification information of the first network element. In a possible implementation, if the token registration record of the first network element exists and the token of the first network element has not expired, step 6b is triggered to be performed. In another possible implementation, if there is no token registration record of the first network element and/or the token of the first network element has expired, step 0 is triggered to be performed, and then step 6a is performed.

In a possible embodiment, when determining that the token registration record of the first network element exists, the fourth network element may obtain the token of the first network element based on the token information of the first network element, and then determine whether the token of the first network element has expired.

6b: The fourth network element checks the token.

Specifically, the fourth network element first checks the validity of the token, where a check method is the same as that in step 10a in Embodiment 1. In a possible implementation, when a validity check result of the token is a pass, the fourth network element checks token content to determine fourth information, where the fourth information indicates a type of data that needs to be collected by the second network element. In another possible implementation, the validity check result of the token is a failure, and the fourth network element sends the data analysis request response to the second network element, where the data analysis request response includes a failure cause.

In a possible implementation, the fourth information may be the same as the first information. For example, referring to Table 1, if the fourth network element checks the token content to determine that the type indications of data for which the first network element has a reading permission are 1, 2, and 3, the fourth network element determines that indications of data types indicated by the fourth information are 1, 2, and 3.

In another possible implementation, the fourth network element generates the fourth information based on the first information, where the fourth information is the same as or different from the first information. For example, the fourth network element generates the fourth information based on the preconfigured rule and the first information. For example, when the preconfigured rule is that collecting information of a first data type is not allowed, and a data type indicated by the first information includes the first data type, the fourth network element modifies the first information, and removes the first data type from the first information to obtain the fourth information.

In another possible implementation, when the fourth information generated by the fourth network element based on the first information is empty, the fourth network element sends the data analysis request response to the first network element, where the response includes a failure cause.

7: The fourth network element sends the identification information of the first network element and the fourth information to the second network element.

In a possible implementation, when the check results in step 6a and step 6b are both a pass, the fourth network element sends the identification information of the first network element and the fourth information to the second network element. A specific manner in which the fourth network element sends the identification information of the first network element and the fourth information is not limited. For example, the identification information of the first network element and the fourth information may be carried in the data analysis request response, and the data analysis request response is sent to the second network element to indicate the second network element to collect data corresponding to a data type indicated by the fourth information, so as to implement directional data collection.

8: The second network element sends the to-be-analyzed data to the fourth network element.

Specifically, the second network element collects the data according to the indication of the fourth information, to obtain the to-be-analyzed data. The second network element sends the to-be-analyzed data to the fourth network element, and a specific manner of sending the to-be-analyzed data by the second network element is not limited. For example, the second network element may send a data analysis request to the fourth network element, where the data analysis request includes identification information of the second network element and the to-be-analyzed data. Optionally, the data analysis request further includes information indicating a data type of the to-be-analyzed data (for example, a data type indication and/or a data type tag).

9a: The fourth network element checks the validity of the token.

9b: The fourth network element checks the content of the token.

Before sending the to-be-analyzed data to the first network element, the fourth network element checks the token of the first network element again.

Specifically, steps 9a and 9b are optional. For details, refer to steps 10a and 10b in Embodiment 1. For example, before step 9a and step 9b, if it is found that the token of the first network element has expired or does not exist, step 0 may be triggered again. If the token of the first network element has not expired, step 9a and step 9b are directly performed.

10: Send the data or a failure response based on a check result.

Specifically, it is determined, based on check results in step 9a and step 9b, to send the to-be-analyzed data or the failure response to the first network element. In a possible implementation, when the check results in step 9a and step 9b are both a pass, the fourth network element sends the to-be-analyzed data to the first network element, to ensure that the first network element has a datread permission for the to-be-analyzed data.

In another possible implementation, when the check result in step 9a or step 9b is a failure, the fourth network element sends the failure response to the first network element, where the failure response includes a failure cause.

If step 9a and step 9b are not performed, the fourth network element directly forwards the to-be-analyzed data (or the data analysis request in step 8) to the first network element.

In Embodiment 2, the second network element actively sends the data analysis request to the first network element, and the fourth network element does not need to check a data type indication in the token of the first network element. The fourth network element determines the fourth information based on the token of the first network element, to indicate the second network element to collect the corresponding data, so as to resolve an issue from the source.

### Embodiment 3

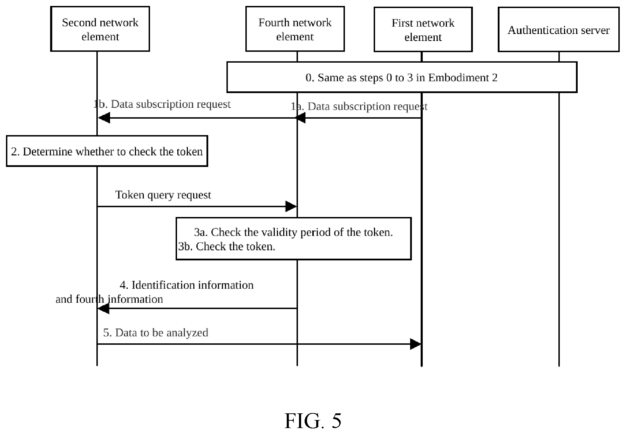

FIG. 5 is a schematic flowchart of another communication method according to an embodiment of this application. The communication method includes the following steps:

0: This is the same as step 0 to step 3 in Embodiment 2.

A first network element registers a token or token information with a fourth network element.

1a: The first network element sends a data subscription request to the fourth network element.

The data subscription request includes identification information of the first network element, and the data subscription request is used to trigger a second network element to perform data collection.

Correspondingly, the fourth network element receives the data subscription request. The fourth network element obtains the identification information of the first network element by using the data subscription request sent by the first network element.

1b: The fourth network element forwards the data subscription request to the second network element.

2: The second network element determines whether to check the token.

Specifically, in a possible implementation, if the second network element determines that the token of the first network element does not need to be checked, the second network element performs data collection based on the data subscription request and/or a preconfigured rule, to obtain to-be-analyzed data, and performs step 5.

The foregoing preconfigured rule may be set according to an actual situation, and is not limited. For example, the preconfigured rule specifies that data whose data type indications are 2 and 3 is to be collected. When the second network element determines, only according to the preconfigured rule, the data that needs to be collected, the second network element needs to collect the data whose data type indications are 2 and 3.

When the second network element determines, only based on the data subscription request, the data that needs to be collected, for example, the second network element determines, based on a name of the data subscription request, the data that needs to be collected. For example, if the name of the data subscription request is "load data subscription request", the data that needs to be collected by the second network element is load data of a service network element.

For example, if the second network element locally caches the token or the token information of the first network element, the second network element does not need to send a token query request. Alternatively, if the second network element determines that token check does not need to be performed in view of security of the first network element, the second network element does not need to send a token query request. For example, if the first network element and the second network element are managed by a same operator, it is determined that the security of the first network element is high, and the token does not need to be checked.

In another possible implementation, if the second network element determines that the token of the first network element needs to be checked, the second network element sends the token query request to the fourth network element, and performs step 3a. The token query request includes the identification information of the first network element.

3a: The fourth network element checks a validity period of the token.

The fourth network element checks the token of the first network element in response to the token query request. The fourth network element first checks the validity period of the token. Specifically, a token registration record is checked based on the identification information of the first network element. In a possible implementation, if the token of the first network element has been registered and has not expired, the fourth network element performs step 3b. In another possible implementation, if the token of the first network element is not registered and/or the token has expired, step 0 is triggered to be performed, and then step 3a is performed.

3b: The fourth network element checks the token.

Specifically, the fourth network element first checks validity of the token, where a check method is the same as that in step 10a in Embodiment 1. In a possible implementation, when a validity check result of the token is a pass, the fourth network element checks token content to determine the fourth information. For details, refer to the record in step 6b. Details are not described again. In another possible implementation, when the validity check result of the token is a failure, the fourth network element sends a data subscription request response to the first network element, where the response includes a failure cause.

4: The fourth network element sends the identification information of the first network element and the fourth information to the second network element.

Specifically, a specific manner in which the fourth network element sends the identification information of the first network element and the fourth information to the second network element is not limited. In a possible implementation, when there is a check pass in both step 3a and step 3b, the fourth network element returns check result information to the second network element, and the check result information includes the identification information of the first network element, a token check result, and the fourth information.

5: The second network element sends the to-be-analyzed data to the first network element.

Specifically, in a possible implementation, the second network element receives the identification information of the first network element and the fourth information; performs data collection based on the fourth information, to obtain the to-be-analyzed data; and sends the to-be-analyzed data to the first network element.

A specific manner in which the second network element sends the to-be-analyzed data is not limited. For example, same as step 8 to step 10 in Embodiment 2, the second network element may send the to-be-analyzed data to the first network element via the fourth network element, and the fourth network element may forward the to-be-analyzed data after performing secondary check on the token of the first network element, or directly forward the to-be-analyzed data (or a data analysis request) to the first network element.

In Embodiment 3, the first network element actively requests data from the second network element, the second network element queries a token status via the fourth network element, and the fourth network element determines the fourth information based on the token, to indicate the second network element to perform data collection.

### Embodiment 4

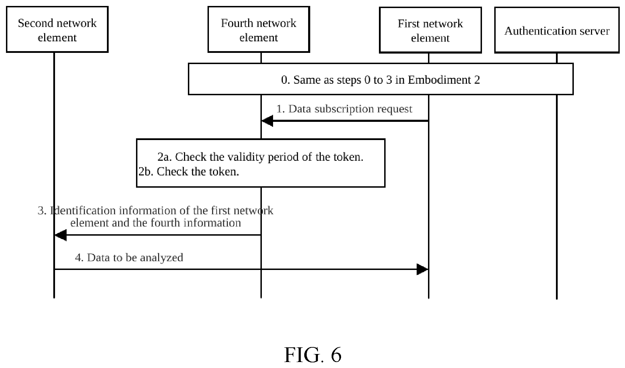

FIG. 6 is a schematic flowchart of another communication method according to an embodiment of this application. The communication method includes the following steps:

0: This is the same as step 0 to step 3 in Embodiment 2.

1: A first network element sends a data subscription request to a fourth network element.

The data subscription request includes identification information of the first network element, and the data subscription request is used to trigger a second network element to perform data collection.

Correspondingly, the fourth network element receives the data subscription request. The fourth network element obtains the identification information of the first network element by using the data subscription request sent by the first network element.

2a: The fourth network element checks a validity period of a token.

In response to the data subscription request, the fourth network element checks the token of the first network element. The fourth network element first checks the validity period of the token. Specifically, a token registration record is checked based on the identification information of the first network element. In a possible implementation, if the token of the first network element has been registered and has not expired, step 2b is performed. In another possible implementation, if the token of the first network element is not registered and/or the token has expired, step 0 is triggered, and then step 2a is performed.

2b: The fourth network element checks the token.

Specifically, the fourth network element first checks validity of the token, where a check method is the same as that in step 10a in Embodiment 1. In an implementation, when a validity check result of the token is a pass, the fourth network element checks token content to determine fourth information. For details, refer to the record in step 6b. Details are not described again. In another possible implementation, when a validity check result of the token is a failure, the fourth network element sends a data subscription request response to the first network element, where the response includes a failure cause.

3: The fourth network element sends the identification information of the first network element and the fourth information to the second network element.

Specifically, in a possible implementation, when there is a check pass in both step 2a and step 2b, the fourth network element sends the identification information of the first network element and the fourth information to the second network element. A specific manner in which the fourth network element sends the identification information of the first network element and the fourth information is not limited. For example, the fourth network element returns check result information to the second network element, where the check result information includes the identification information of the first network element, a token check result, and the fourth information.

In another possible implementation, when a check result in step 2a and/or step 2b is a failure, the fourth network element returns a subscription failure response to the first network element, where the subscription failure response includes a failure cause.

4: The second network element sends to-be-analyzed data to the first network element.

Specifically, the second network element receives the identification information of the first network element and the fourth information; performs data collection based on the fourth information, to obtain the to-be-analyzed data; and sends the to-be-analyzed data to the first network element.

A specific manner in which the second network element sends the to-be-analyzed data is not limited. Same as step 8 to step 10 in Embodiment 2, the second network element may send the to-be-analyzed data to the first network element via the fourth network element, and the fourth network element may forward the to-be-analyzed data after performing secondary check on the token of the first network element, or directly forward the to-be-analyzed data (or a data analysis request) to the first network element.

In Embodiment 4, the first network element actively requests data, and the fourth network element queries a token status and indicates, based on the token, the second network element to perform data collection.

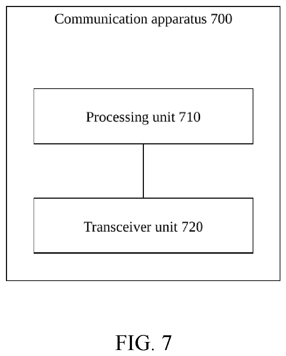

FIG. 7, FIG. 8, and FIG. 9 are diagrams of structures of possible communication apparatuses according to embodiments of this application. These communication apparatuses may be configured to implement functions of the first network element, the fourth network element, or the authentication server in the foregoing method embodiments, and therefore can also implement beneficial effects of the foregoing method embodiments. In embodiments of this application, the communication apparatus may be a first network element, a fourth network element, or an authentication server, or may be a module (for example, a chip) used in the first network element, the fourth network element, or the authentication server.

As shown in FIG. 7, a communication apparatus 700 includes a processing unit 710 and a transceiver unit 720. The communication apparatus 700 is configured to implement a function of the fourth network element in the method embodiment shown in FIG. 2. Alternatively, the communication apparatus 700 may include a module configured to implement any function or operation of the fourth network element in the method embodiment shown in FIG. 2. The module may be all or partially implemented by using software, hardware, firmware, or any combination thereof.

When the communication apparatus 700 is configured to implement the function of the fourth network element in the method embodiment shown in FIG. 2, the processing unit 710 is configured to obtain identification information of a first network element. The processing unit 710 is further configured to determine, based on a token of the first network element, to-be-analyzed data from a second network element, where the token corresponds to the identification information of the first network element, the token includes first information, the first information indicates a data type for which the first network element has read permission, and the to-be-analyzed data is used to evaluate a service network element. The transceiver unit 720 is configured to send the to-be-analyzed data to the first network element.

For more detailed descriptions of the processing unit 710 and the transceiver unit 720, directly refer to the related descriptions in any one of the method embodiments in FIG. 2 to FIG. 6. Details are not described herein again.

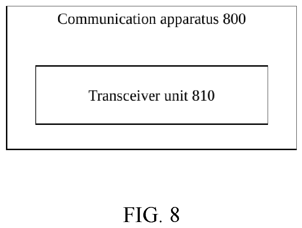

As shown in FIG. 8, a communication apparatus 800 includes a transceiver unit 810. The communication apparatus 800 is configured to implement a function of the authentication server or the first network element in the method embodiment shown in FIG. 3. Alternatively, the communication apparatus 800 may include a module configured to implement any function or operation of the authentication server or the first network element in the method embodiment shown in FIG. 3. The module may be all or partially implemented by using software, hardware, firmware, or any combination thereof.

When the communication apparatus 800 is configured to implement the function of the authentication server in the method embodiment shown in FIG. 3, the transceiver unit 810 is configured to receive a token issuance request of a first network element, where the token issuance request includes identification information of the first network element. The transceiver unit 810 is further configured to send a token granting response to the first network element, where the token granting response includes a token of the first network element, the token corresponds to the identification information of the first network element, the token includes first information, and the first information indicates a data type for which the first network element has read permission.

When the communication apparatus 800 is configured to implement the function of the first network element in the method embodiment shown in FIG. 3, the transceiver unit 810 is configured to send a token issuance request to an authentication server, where the token issuance request includes identification information of the first network element. The transceiver unit 810 is further configured to receive a token granting response sent by the authentication server, where the token granting response includes a token of the first network element, the token corresponds to the identification information of the first network element, the token includes first information, and the first information indicates a data type for which the first network element has read permission.

For more detailed descriptions of the transceiver unit 810, directly refer to the related descriptions in the method embodiment shown in FIG. 3. Details are not described herein again.

As shown in FIG. 8, a communication apparatus 800 includes a transceiver unit 810. The communication apparatus 800 is configured to implement a function of the first network element in the method embodiment shown in FIG. 2. Alternatively, the communication apparatus 800 may include a module configured to implement any function or operation of the first network element in the method embodiment shown in FIG. 2. The module may be all or partially implemented by using software, hardware, firmware, or any combination thereof.

When the communication apparatus 800 is configured to implement the function of the first network element in the method embodiment shown in FIG. 2, the transceiver unit 810 is configured to receive to-be-analyzed data sent by a fourth network element, where the to-be-analyzed data is determined by the fourth network element based on a token of the first network element, the to-be-analyzed data is from a second network element, the token corresponds to identification information of the first network element, the token includes first information, the first information indicates a data type for which the first network element has read permission, and the to-be-analyzed data is used to evaluate a service network element.

For more detailed descriptions of the transceiver unit 810, directly refer to the related descriptions in any method embodiment in FIG. 2 to FIG. 6. Details are not described herein again.

For example, an embodiment of this application further provides a communication system, including the fourth network element and the first network element shown in FIG. 2.

For example, an embodiment of this application further provides a communication system, including the first network element and the authentication server shown in FIG. 3.

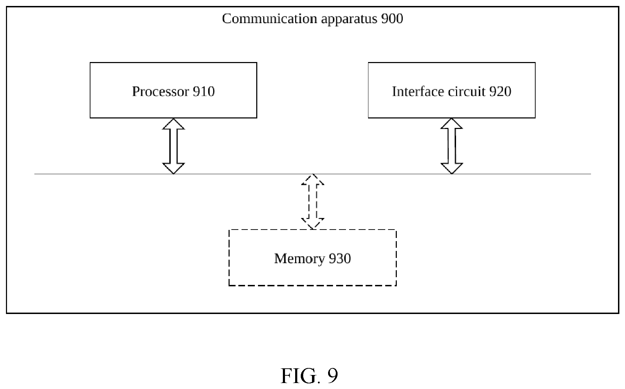

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to: store instructions executed by the processor 910, store input data for the processor 910 to run instructions, or store data generated after the processor 910 runs instructions. There may be one or more memories 930, and there may be one or more processors 910.

When the communication apparatus 900 is configured to implement a function of the fourth network element in the method shown in FIG. 2, the processor 910 is configured to implement a function of the processing unit 710, and the interface circuit 920 is configured to implement a function of the transceiver unit 720. When the communication apparatus 900 is configured to implement a function of the first network element in the method shown in FIG. 2, the interface circuit 920 is configured to implement a function of the transceiver unit 810. When the communication apparatus 900 is configured to implement the method shown in FIG. 3, the interface circuit 920 is configured to implement a function of the transceiver unit 810.

When the communication apparatus is a chip used in a network device, the chip in the network device implements a function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

For example, the communication apparatus 900 may be a chip or a chip system.

It may be understood that the processor 910 in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The memory 930 may be a read-only memory (Read-Only Memory, ROM), a static storage device, a dynamic storage device, or a random access memory (Random Access Memory, RAM). The memory 930 may store a program. When the program stored in the memory 930 is executed by the processor 910, the processor 910 is configured to perform steps of the communication method in any one of the foregoing embodiments.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A communication method, wherein the method comprises:
obtaining identification information of a first network element;
determining, based on a token of the first network element, to-be-analyzed data from a second network element, wherein the token corresponds to the identification information of the first network element, the token comprises first information, the first information indicates a data type for which the first network element has read permission, and the to-be-analyzed data is used to evaluate a service network element; and
sending the to-be-analyzed data to the first network element.

2. The method according to claim 1, wherein the determining, based on the token of the first network element, the to-be-analyzed data from the second network element comprises:
determining the to-be-analyzed data based on the token and collected data of the second network element, wherein a data type of the to-be-analyzed data is a data type of all or a part of the collected data.

3. The method according to claim 1 or 2, wherein the obtaining the identification information of the first network element comprises:
receiving a data analysis request of the second network element, wherein the data analysis request comprises the identification information of the first network element, and the data analysis request is used to trigger the first network element to perform data analysis.

4. The method according to claim 3, wherein the data analysis request further comprises the collected data of the second network element and second information, wherein the second information indicates a data type of the collected data; and
the determining, based on the token of the first network element, the to-be-analyzed data from the second network element comprises:
determining the to-be-analyzed data from the collected data based on the token and the second information, wherein the data type of the to-be-analyzed data is an intersection data type of a data type indicated by the token and the data type indicated by the second information.

5. The method according to claim 3 or 4, wherein after the receiving the data analysis request of the second network element, the method further comprises:
sending a token check request to the first network element; and
receiving a token check response of the first network element, wherein the token check response comprises the token of the first network element.

6. The method according to claim 3, wherein after the receiving the data analysis request of the second network element, the method further comprises:
sending the data analysis request to the first network element; and
receiving a data analysis request response of the first network element; and
the determining, based on the token of the first network element, the to-be-analyzed data from the second network element comprises:
when the data analysis request response indicates that the first network element accepts the data analysis request, determining the to-be-analyzed data based on the token of the first network element.

7. The method according to claim 6, wherein the data analysis request further comprises a type of data that is expected to be analyzed for the second network element; and
when the first network element does not support reading of the type of data that is expected to be analyzed, the data analysis request response comprises a type of data that is unreadable by the first network element.

8. The method according to claim 3, 6, or 7, wherein the determining, based on the token of the first network element, the to-be-analyzed data from the second network element comprises:
checking the token of the first network element;
when a check result of the token is that the check is a pass, sending the data analysis request response to the second network element, wherein the data analysis request response comprises the identification information of the first network element and the first information; and
receiving the to-be-analyzed data of the second network element, wherein the data type of the to-be-analyzed data is a data type indicated by the first information.

9. The method according to claim 8, wherein the sending the to-be-analyzed data to the first network element comprises:
checking the token of the first network element again; and
when a check result of the token is that the check is a pass, sending the to-be-analyzed data to the first network element.

10. The method according to claim 1, wherein the obtaining the identification information of the first network element comprises:
receiving a data subscription request sent by the first network element, wherein the data subscription request comprises the identification information of the first network element, and the data subscription request is used to trigger the second network element to perform data collection.

11. The method according to claim 10, wherein the determining the to-be-analyzed data based on the token of the first network element comprises:
checking the token of the first network element;
when a check result of the token is that the check is a pass, sending the identification information of the first network element and the first information to the second network element; and
receiving a data analysis request of the second network element, wherein the data analysis request comprises the to-be-analyzed data and the identification information of the first network element, and a data type of the to-be-analyzed data is a data type indicated by the first information.

12. The method according to claim 11, wherein the sending the to-be-analyzed data to the first network element comprises:
sending the data analysis request to the first network element.

13. The method according to claim 11 or 12, wherein the checking the token of the first network element comprises:
sending the data subscription request to the second network element;
receiving a token query request sent by the second network element, wherein the token query request comprises the identification information of the first network element; and
checking the token of the first network element in response to the token query request.

14. The method according to any one of claims 1 to 13, wherein the method further comprises:
receiving a token registration request of the first network element, wherein the token registration request comprises the identification information of the first network element and the token of the first network element; and
storing the identification information of the first network element and the token of the first network element.

15. The method according to claim 14, wherein the storing the identification information of the first network element and the token of the first network element comprises:
performing validity check on the token of the first network element; and
when a check result of the validity check is that the check is a pass, storing the identification information of the first network element and the token of the first network element.

16. The method according to any one of claims 1 to 15, wherein the data type comprises at least one of the following:
load data of the service network element, resource utilization data of the service network element, abnormal event data of the service network element, or energy consumption data of the service network element.

17. The method according to claim 16, wherein the load data is from a network repository network element, or the resource utilization data and/or the abnormal event data is from an operation administration and maintenance network element.

18. A communication method, wherein the method comprises:
receiving a token issuance request of a first network element, wherein the token issuance request comprises identification information of the first network element; and
sending a token granting response to the first network element, wherein the token granting response comprises a token of the first network element, the token corresponds to the identification information of the first network element, the token comprises first information, and the first information indicates a data type for which the first network element has read permission.

19. The method according to claim 18, wherein after the receiving the token issuance request of the first network element, the method further comprises:
sending a subscription information query request to a third network element, wherein the subscription information query request comprises the identification information of the first network element; and
receiving a subscription information response sent by the third network element, wherein the subscription information response comprises a trust level and/or a service type of the first network element, wherein
the token of the first network element is determined based on the identification information of the first network element and/or the subscription information response.

20. The method according to claim 19, wherein the token issuance request further comprises third information, and the third information indicates a type of data that the first network element prefers to read; and
the token of the first network element is determined based on at least one of the identification information of the first network element, the subscription information response, and the third information.

21. A communication method, applied to a first network element, wherein the method comprises:
sending a token issuance request to an authentication server, wherein the token issuance request comprises identification information of the first network element; and
receiving a token granting response sent by the authentication server, wherein the token granting response comprises a token of the first network element, the token corresponds to the identification information of the first network element, the token comprises first information, and the first information indicates a data type for which the first network element has read permission.

22. The method according to claim 21, wherein the token of the first network element is determined based on the identification information of the first network element and/or a subscription information response from a third network element, and the subscription information response comprises a trust level and/or a service type of the first network element.

23. The method according to claim 22, wherein the token issuance request further comprises third information, and the third information indicates a type of data that the first network element prefers to read; and
the token of the first network element is determined based on at least one of the identification information of the first network element, the subscription information response, and the third information.

24. A communication apparatus, comprising a module configured to perform the method according to any one of claims 1 to 23.

25. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 23 by using a logic circuit or executing code instructions.

26. A computer-readable storage medium, wherein the storage medium stores a computer program or instructions, and when the computer program or the instructions are executed by a communication apparatus, the method according to any one of claims 1 to 23 is implemented.
